Europäisches Patentamt

European Patent Office

Office européen des brevets

(11) Publication number: **0 211 531 B1**

# EUROPEAN PATENT SPECIFICATION

(45) Date of publication of patent specification: **04.09.91**  (51) Int. Cl.⁵: **C08G 12/12**

(21) Application number: **86305340.1**

(22) Date of filing: **11.07.86**

(54) Process for making solid urea-formaldehyde resins.

(30) Priority: **01.08.85 GB 8519392**

(43) Date of publication of application:
**25.02.87 Bulletin 87/09**

(45) Publication of the grant of the patent:
**04.09.91 Bulletin 91/36**

(84) Designated Contracting States:
**CH DE FR IT LI SE**

(56) References cited:
**DD-A- 88 196**
**DD-A- 161 058**
**FR-A- 2 355 862**
**GB-A- 2 155 941**

**CHEMICAL ABSTRACTS, vol. 77, no. 8, 22nd February 1971, page 20, abstract no. 32245c, Columbus, Ohio, US; S.A. MACIASZEK: "Condensation of area-formaldehyde resins at elevated temperature" & POLYMERY 1970, 15(6), 276-9**

(73) Proprietor: **BIP CHEMICALS LIMITED**
**20 St. Mary's Parsonage**
**Manchester M3 2NL(GB)**

(72) Inventor: **Taylor, David**
**1 Peverels Way**
**Duston Northampton(GB)**

(74) Representative: **Hadfield, Robert Franklin et al**
**Bowdon House PO Box 20 Ashburton Road**
**West Trafford Park**
**Manchester M17 1RA(GB)**

**Description**

This invention relates to the manufacture of resins and in particular to the manufacture of resins from urea and formaldehyde.

In our GB-A- 2155941 (not prepublished) we have described and claimed a process for the manufacture of a solid urea-formaldehyde resin which comprises the steps of

a) reacting a solution of formaldehyde in water with urea at a molar ratio of formaldehyde to urea which is greater THAN 2.5:1,

b) concentrating the solution so made until its total water content was less than 50% by weight.

c) adding further urea to adjust the molar ratio of formaldehyde to urea to between 2.0 :1 and 1.1:1 and

d) concentrating the solution further without precipitation of solid resin to reduce the water content to such a level that on cooling the liquid resin product, a friable solid is obtained,

wherein a stabilization agent is reacted into said solution of formaldehyde or formaldehyde and urea prior to step (d) in order to prevent precipitation of resin in step (d).

This process is suited to batch manufacture of resin using bulk evaporation in step d) and uses a stabilization agent which is reacted into the resin prior to step d).

The process can be used to make solid resin if step d) is carried out in other ways but we have also found that if the other steps are carried out in particular ways, and step d) is carried out rapidly, for example in a vacuum kneader or on a thin film evaporator, the stabilization agent need not be used.

Thus according to the present invention a process for the manufacture of a solid urea-formaldehyde resin comprises the steps of

a) reacting a solution of formaldehyde in water with urea under acid conditions at a molar ratio of formaldehyde to urea which is greater than 2.5 to 1, the reaction conditions being 15 to 100 minutes at 100° C at pH6 or their equivalent; adjusting the pH to be neutral to mildly alkaline and

b) if necessary concentrating the solution so made to reduce its water content to less than 50 per cent by weight

c) adding further urea to adjust the molar ratio of formaldehyde to urea to between 2.0 to 1 and 1.1 to 1, and

d) evaporating water from the solution using a thin film evaporator, vacuum kneader or spray drier, whereby rapid evaporation of water takes place without substantial increase in the degree of condensation of the resin and without substantial precipitation of the solid resin to reduce the water content to such a level that on cooling the liquid resin product a friable solid is obtained.

The first step of the process is reaction of urea and formaldehyde under acid conditions. It will be appreciated that the higher the temperature the greater is the rate of reaction and lowering the pH of the solution has the same effect. By "equivalent conditions" we mean conditions of temperature/time/pH which will give rise to the same degree of condensation in the reaction product.

Degree of condensation may be determined from the following formula

$$\text{Degree of condensation (\%)} = \frac{(\text{Total HCHO (1)} - \text{Methylol} \quad \text{HCHO (2)})}{(\text{Total HCHO (1)})} \times 100$$

Where

(1) Total HCHO is the total formaldehyde content determined by acid hydrolysis followed by sulphite determination of liberated formaldehyde

(2) Methylol HCHO content is determined by the ACC Sulphite method.

The pH is preferably adjusted when necessary during the process using such reagents as sodium hydroxide and formic acid. It is preferred not to use a mineral acid.

Since precipitation of highly condensed insoluble resin is to be avoided step a) should be carried out in a controllable manner and temperatures above 100° C would normally not be used. Similarly a pH below 4 would normally be avoided.

Temperatures up to 150° could be employed if the reaction were carried out under elevated pressure in a suitable vessel and appropriate modification of the pH conditions would then be required.

Alternative conditions to the 15 to 100 minutes at pH6 and 100° C can readily be determined experimentally by those skilled in the art.

2

The step b) need only include concentration if the water content at the end of step a) is above 50 per cent by weight, but it is necessary to adjust the pH to neutral or mildly alkaline conditions. Theoretically neutrality is the ideal, however, when urea is added in step c) slight acidity develops and it is usual to make the solution mildly alkaline in step b) to ensure that the urea addition does not re-create acid conditions. By "mildly alkaline" we mean having a pH of about 7.5 to 8.5.

In step c) care must be taken to make sure that the molar ratio of formaldehyde to urea does not fall below 1 to 1 at any stage.

The step d) will generally be carried out using a thin film evaporator or a vacuum kneader or a spray dryer may be used. These create conditions wherein water can be removed very rapidly thereby enabling concentration to take place without substantial further condensation of the resin. Spray drying is a less convenient method because of the relatively low melting point of the resin being made, and this would require special provision to cool and collect the dried but tacky resin particles.

All the various types of thin film evaporator may be used including, for example, roller driers, and enclosed evaporators in which the thin film is on the interior surface of a heated drum. The latter includes wiped film evaporators.

The total water content of the solid resin product produced after cooling is in the range 5% to 12% and the resin is readily soluble in hot water. Preferably the degree of condensation of the solid resin is in the range 25 to 50 per cent, more preferably 35 to 45 per cent.

It will be noted that the process described in the present invention can give a satisfactory solid resin product at a degree of condensation slightly higher than the 25 per cent to 45 per cent claimed in GB-A-2155941: see Example 3 in Table II later.

Resin Modifiers may be introduced into the resin at any stage of the reaction for benefits they may give during manufacture of the resin, eg to enable particular degrees of condensation to be achieved, or during subsequent uses of the solid resin. Modifiers which can be used include, for example, "amides, reactive organic hydroxyl compounds, amino triazine compounds such as melamine, and the reaction products of these compounds with formaldehyde. Examples of specific compounds which can be used are acetamide, sulphanilamide, malonamide, para-toluene sulphonamide, succinamide, dicyandiamide, phenol, ethylene glycol, o-cresol and melamine - formaldehyde resins. Mixtures of modifiers may also be used. Preferred modifiers are melamine, p-toluene sulphonamide and sulphanilamide.

The amount of such modifier when used in this way is preferably not more than 10% by weight of the total resin. There is no theoretical minimum but in general at least 1% by weight would normally be used to gain the desired benefits in subsequent performance when using the resin.

If it is desired to produce a mixed resin, greater amounts of the modifier compounds may be incorporated for example up to 30% by weight of the resin. Melamine is particularly suitable to be used in this way.

The resin may be used for example in the manufacture of laminates or adhesives or as the solid resin in the amino formaldehyde compositions described in our GB-A- 2158082.

The invention will now be particularly described, by way of example only, by means of the following examples.

## Examples

### a) preparation of resin solutions (Steps A to C)

In all of the preparations of the solutions the following formulation was used: 200 litres 44% Formalin, 66 kg urea

This was reacted under acid conditions pH 5.8-6.0 for 15, 60 and 90 minutes. At this point the pH was adjusted to 7.8 - 8.0, and the distillate removed was weighed. If less than 74 kgs had been removed, which was the case in both the 15, and 60 minute preparations, vacuum concentration was carried out at 65° C until the required amount of distillate had been removed.

In the 90 minute acid phase preparation more than 74 kg of distillate was removed, therefore the difference was returned to the still and no vacuum concentration was required.

63 kg urea with PTSA and Melamine to give 1.8% and 1% in the resin was added to the 15 and 60 minute acid phase resin solutions and dissolved before discharging. In the case of the 90 minute acid phase resin 63 kg of urea was added and disolved but only half was discharged initially. To the other half were added 1.8% PTSA *and 1% Melamine as modifiers and disolved before the resin solution was discharged.

(*PTSA is p-toluene sulphonamide)

b) Evaporation of resin solutions (step d)

The resin solutions so prepared were fed to a thin film evaporator for water to be removed for step d). The evaporator used had a steam heated drum 155mm in diameter and 0.23m² of evaporation surface.

The steam pressures rotor speed, feed rate etc were successfully adjusted in order to produce a brittle resin in each case and details of the process conditions are given in table 1 over the page.

TABLE 1

| Example No | 1 | 2 | 3 | 4 |
|---|---|---|---|---|
| Resin | 15 Min acid phase (Modified) | 60 Min acid phase (Modified) | 90 Min acid phase (Modified) | 90 Min acid phase (Unmodified) |
| Steam Pressure (kPa) | 552 | 552 | 517 | 552 |
| Rotor Speed (rpm) | 370 | 370 | 290 | 290 |
| Product Temp. (°C) | 125 | 125 | 125 | 123 |
| Feed Rate (Kg/hr) | 32 | 41 | - | - |
| Comments | one resin sample precipitated | satisfactory | Resins tended to exotherm in cooling tray | |

The composition and properties of the solid resins produced are given below in Table II.

4

TABLE II

| Example No | 1 | 2 | 3 | 4 |
|---|---|---|---|---|
| Urea: Formaldehyde molar ratio | 1:1.43 | 1:1.43 | 1:1.42 | 1:1.42 |
| Total $H_2O$ content (%) | 11.4 | 11.9 | 10.7 | 11.5 |
| Free $H_2O$ content (%) | 1.7 | 1.6 | 2.4 | 2.09 |
| Degree of Condensation (%) | 34.5 | 40.0 | 48.7 | 41.4 |
| Melting Point($^{\circ}$C) | 89 | 60 | 75 | 73 |

The examples clearly establish that satisfactory resins may be produced using the process as described, and a thin film evaporator.

The resins produced with 15 minute acid treatment showed some signs of instability, one precipitating unexpectedly and it was concluded that the 15 minute treatment is the borderline for stable resin.

The 60 minute resin was satisfactory in every way. The 90 minute resins produced were satisfactory but the tendency to exotherm when discharged from the evaporator showed signs of impending difficulty. An attempt to produce a resin using a 120 minute acid reaction phase totally failed, the resin overheating and gelling during water removal.

**Claims**

1. A process for the manufacture of a solid urea-formaldehyde resin which comprises the steps of

   a) reacting a solution of formaldehyde in water with urea under acid conditions at a molar ratio of formaldehyde to urea which is greater than 2.5 to 1, the reaction conditions being 15 to 100 minutes at 100$^{\circ}$C at pH6 or conditions of time, temperature and pH such as to give the same degree of condensation in the reaction product; adjusting the pH to be neutral to mildly alkaline; and

   b) if necessary concentrating the solution so made to reduce its water content to less than 50 per cent by weight;

   c) adding further urea to adjust the molar ratio of formaldehyde to urea to between 2.0 to 1 and 1.1 to 1; and

   d) evaporating water from the solution using a thin film evaporator, vacuum kneader or spray drier, whereby rapid evaporation of water takes place without substantial increase in the degree of condensation of the resin and without substantial precipitation of the solid resin to reduce the water content to such a level that on cooling the liquid resin product a friable solid is obtained.

2. A process according to claim 1 in which step a) is not carried out under pressure and is carried out at a temperature not greater than 100 C and a pH in the range 4 to 6.

3. A process according to claim 1 or 2 wherein a modifier compound is incorporated into the resin at any stage of the reaction.

4. A process according to Claim 3 wherein the modifier compound is incorporated in an amount up to 30 per cent by weight of the resin.

5. A process according to Claim 3 wherein the modifier is selected from amides, reactive organic hydroxyl compounds, amino triazine compounds, the reaction products of such compounds with formaldehyde, and mixtures thereof.

6. A process according to Claim 5 wherein the modifier is selected from melamine, para-toluene sulphonamide and sulphanilamide and mixtures thereof.

7. A process according to any preceding Claim wherein the degree of condensation of the solid resin is in the range of 25 per cent to 50 per cent.

**Revendications**

1. Procédé de préparation d' une résine urée-formaldéhyde solide, caractérisé en ce qu'il comprend les phases suivantes :
   a) réaction d'une solution de formaldéhyde dans de l'eau avec de l'urée, dans des conditions acides, avec un rapport molaire formaldéhyde/urée supérieur à 2,5 : 1, les conditions réactionnelles étant de 15 à 100 minutes, à 100°C, pH 6, ou des conditions de temps, de température et de pH telles qu'elles procurent le même degré de condensation du produit réactionnel ; réglage du pH de manière à ce qu'il soit neutre à légèrement alcalin, et
   b) si nécessaire, concentration de la solution ainsi préparée, pour réduire sa teneur en eau à moins de 50 % en poids,
   c) ajout d'urée supplémentaire pour régler le rapport molaire formaldéhyde/urée entre 2,0:1 et 1,1:1, et
   d) évaporation de l'eau de la solution au moyen d'un évaporateur en couche mince, d'un malaxeur sous vide ou d'un séchoir par pulvérisation, et il se produit alors une évaporation rapide de l'eau, sans augmentation substantielle du degré de condensation de la résine et sans précipitation substantielle de la résine solide, pour réduire la teneur en eau à un niveau tel qu'on obtient un solide friable en refroidissant le produit résine liquide.

2. Procédé selon la revendication 1, caractérisé en ce que la phase a) n'est pas réalisée sous pression, et est réalisée à une température qui n'excède pas 100°C et à un pH compris entre 4 et 6.

3. Procédé selon la revendication 1 ou 2, caractérisé en ce qu'on incorpore un composé modificateur à la resine, à n'importe quel stade de la réaction.

4. Procédé selon la revendication 3, caractérisé en ce que le composé modificateur est incorporé à raison d'une quantité allant jusqu'à 30 % en poids de la résine.

5. Procédé selon la revendication 3, caractérisé en en ce que le modificateur est choisi parmi des amides, des composés hydroxylés organiques réactifs, des composés aminotriazine, les produits de réaction de tels composés avec du formaldéhyde, et des mélanges de ceux-ci.

6. Procédé selon la revendication 5, caractérisé en ce que le modificateur est choisi parmi la mélamine, le para-toluène-sulfonamide ou le sulfanilamide, ou des mélanges de ceux-ci.

7. Procédé selon l'une quelconque des revendications précédentes, caractérisé en ce que le degré de condensation de la résine solide est compris entre 25 et 50 %.

**Patentansprüche**

1. Verfahren zur Herstellung eines festen Harnstoff-Formaldehydharzes, dadurch gekennzeichnet, daß man

   a) eine Lösung von Formaldehyd in Wasser mit Harnstoff unter sauren Bedingungen bei einem molaren Verhältnis von Formaldehyd zu Harnstoff umsetzt, das größer ist als 2,5 zu 1, wobei die Reaktionsbedingungen 15 bis 100 min bei 100°C und bei pH 6 sind oder derartige Bedingungen von Zeit, Temperatur und pH, daß man den gleichen Kondensationsgrad im Reaktionsprodukt erhält, das pH auf neutral oder schwach alkalisch einstellt; und

   b) erforderlichenfalls die Lösung soweit konzentriert, daß ihr Wassergehalt auf weniger als 50 Gew.-% vermindert wird;

   c) weiteren Harnstoff zusetzt, um das molare Verhältnis von Formaldehyd zu Harnstoff auf einen Wert zwischen 2,0 zu 1 und 1,1 zu 1 einzustellen; und

   d) Wasser aus der Lösung verdampft unter Verwendung eines Dünnschichtverdampfers, Vakuumkneters oder Sprühtrockners, wodurch eine rasche Verdampfung von Wasser ohne wesentliche Zunahme im Kondensationsgrad des Harzes und ohne wesentliche Ausfällung des festen Harzes erfolgt zur Verminderung des Wassergehaltes auf einen solchen Grad, daß beim Abkühlen des flüssigen Harzproduktes ein bröckeliger Feststoff erhalten wird.

2. Verfahren nach Anspruch 1, dadurch gekennzeichnet, daß die Stufe a) nicht unter Druck und bei einer Temperatur von nicht mehr als 100°C und einem pH im Bereich von 4 bis 6 durchgeführt wird.

3. Verfahren nach Anspruch 1 oder 2, dadurch gekennzeichnet, daß eine Modifizierungsverbindung in das Harz bei irgendeiner Stufe der Reaktion eingebracht wird.

4. Verfahren nach Anspruch 3, dadurch gekennzeichnet, daß die Modifizierungsverbindung in einer Menge von bis zu 30 Gew.-% des Harzes eingebracht wird.

5. Verfahren nach Anspruch 3, dadurch gekennzeichnet, daß das Modifizierungsmittel aus der Gruppe Amide, reaktive organische Hydroxylverbindungen, Aminotriazinverbindungen, den Reaktionsprodukten solcher Verbindungen mit Formaldehyd, und Gemischen davon gewählt ist.

6. Verfahren nach Anspruch 5, dadurch gekennzeichnet, daß das Modifizierungsmittel aus der Gruppe Melamin, p-Toluolsulfonamid und Sulfanilamid und Gemischen davon gewählt ist.

7. Verfahren nach einem der vorhergehenden Ansprüche, dadurch gekennzeichnet, daß der Kondensationsgrad des festen Harzes im Bereich von 25% bis 50% liegt.